# EUROPEAN PATENT APPLICATION

(11) **EP 2 497 587 A1**
(43) Date of publication of application: **12.09.2012**
(21) Application number: 10837350.7
(22) Date of filing: 18.10.2010
(51) Int. Cl.: B22F 7/04, F16C 33/12, F16C 33/14

(54) **METHOD OF MANUFACTURING SLIDING MEMBER AND SLIDING MEMBER**

(30) Priority: 14.12.2009 JP 2009283347
(71) Applicant: Taiho Kogyo Co., Ltd, Toyota-shi, Aichi 471-8502 (JP)
(72) Inventor: KURONO Takahiro, Toyota-shi Aichi 471-8502 (JP); KONDO Kazunori, Toyota-shi Aichi 471-8502 (JP); SEI Hirofumi, Toyota-shi Aichi 471-8502 (JP); SATO Eichi, Toyota-shi Aichi 471-8502 (JP)
(74) Representative: Cabinet Plasseraud
(86) International application number: PCT/JP2010/068284
(87) International publication number: WO 2011/074320

(57) **Abstract**

First, in a primary sintering step, a manufacturing system 1 for a sliding member 2 laminates and thereby forms a sintered alloy layer 4 on back metal 3. Subsequently, a large number of indents 5 are formed on a front surface of the sintered alloy layer 4 by an indent forming mechanism 14. Next, the back metal 3 and sintered alloy layer 4 are rolled by a reduction roll 15 and a secondary sintering process is applied to the sintered alloy layer 4. Consequently, the sliding member 2 is manufactured with the large number of indents 5 provided on a front surface.

Since the indents 5 are formed on the sintered alloy layer 4 after the primary sintering step, it is possible to inhibit work hardening from occurring in the indents 5 and surrounding areas.

## Description

### Technical Field

The present invention relates to a manufacturing method for a sliding member as well as to the sliding member, and more particularly to a manufacturing method for a sliding member on whose sliding surface a large number of indents are formed as well as to the sliding member manufactured by the manufacturing method.

### Background Art

Conventionally, sliding bearings on whose sliding surface a large number of indents are provided as oil sumps have been proposed (e.g., Patent Literature 1). A manufacturing method proposed in Patent Literature 1 has a problem in that when indents are formed on the sliding surface of a sliding member, metallic components at bottoms and surroundings of the indents become lamellar, causing work hardening and thereby producing cracks in the bottoms of the indents.
Thus, in view of the problem with Patent Literature 1 described above, the present applicant has proposed a manufacturing method for a sliding member less prone to crack development in bottoms of indents when the indents are formed on a sliding surface (Patent Literature 2).

### Prior Art Documents

### Patent Literature

Patent Literature 1: Japanese Patent Laid-Open No. 11-201166
Patent Literature 2: Japanese Patent Laid-Open No. 2009-2410

### Summary of Invention

### Problems to be Solved by the Invention

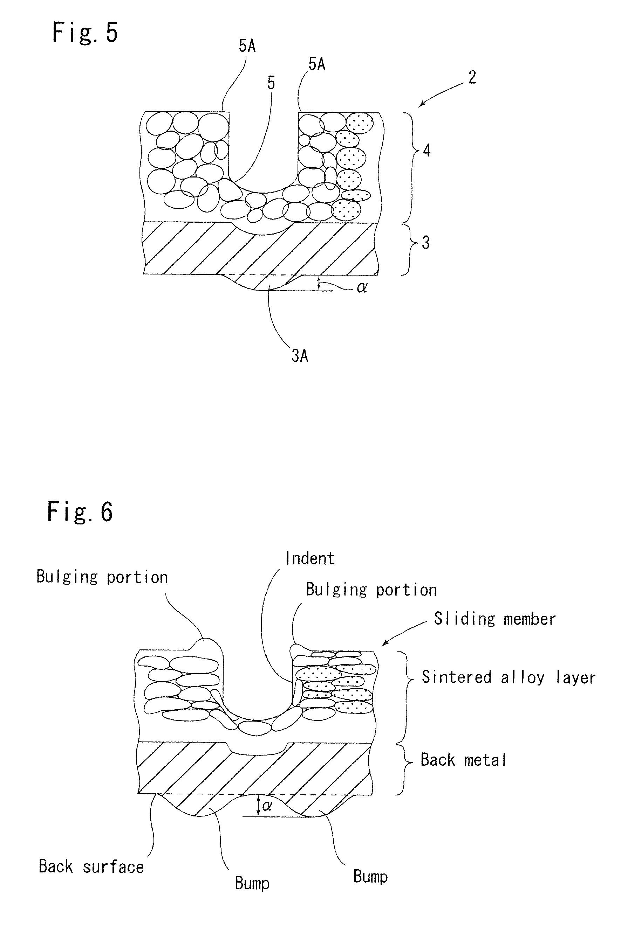

The inventor conducted further experiments and studies in relation to the manufacturing method proposed in Patent Literature 2 and found that the manufacturing method proposed in Patent Literature 2, although able to eliminate the drawbacks of the manufacturing method proposed in Patent Literature 1, had the following drawback. Specifically, as shown in a schematic sectional view in Figure 6, when a large number of indents were formed in a sintered alloy layer of a sliding member, minute bumps were produced on a back surface of the sliding member (back surface of back metal) at locations corresponding to the indents. If such minute bumps are produced on the back surface of the sliding member, when a back surface of a sliding bearing created by forming the sliding member is laid over a housing and fixed thereto, improper contact will be made between the back surface of the sliding bearing and the housing fixing the sliding bearing. That is, there is a drawback in that a substantial contact area between the back surface of the sliding bearing and the housing is decreased, causing the sliding bearing to easily come off the housing.
Also, there is a problem in that edges and neighboring portions of the indents will become lamellar, resulting in work hardening and that the edges of the indents will bulge. Consequently, the manufacturing method proposed in Patent Literature 2 has a problem in that after the indents are formed in the sliding member, a finishing operation is needed in a subsequent step in order to remove the bumps in the back surface and the bulging portions on the edges of the indents, requiring additional cost and time.

### Means for Solving the Problems

In view of the above circumstance, the present invention provides a manufacturing method for a sliding member made up of a sintered alloy layer laminated on a front surface of back metal with a large number of indents formed on a front surface of the sintered alloy layer, the manufacturing method comprising: sprinkling powder of at least one or more types of metal over the front surface of the back metal; applying a primary sintering process to the powder of the metal to laminate and thereby form the sintered alloy layer on the front surface of the back metal; forming the large number of indents on the front surface of the sintered alloy layer laminated on the back metal; rolling the sintered alloy layer with the indents formed thereon, together with the back metal; and then applying a secondary sintering process to the sintered alloy layer with the indents formed thereon, thereby manufacturing the sliding member.

### Advantageous Effects of Invention

As is clear from experimental results described later, with the configuration described above, amounts of protrusion of bumps produced on the back surface are smaller than in the case of the manufacturing method proposed in the earlier application described above, where the bumps are formed at locations corresponding to the indents when the indents are formed. Moreover, the above-described configuration can prevent edges of the indents from bulging. This makes it possible to simplify the operation of removing bulging portions on the edges of the indents as well as bumps produced on the back surface compared to the conventional methods described above. Thus, the present invention can provide a manufacturing method for a sliding member with a simpler finishing operation than the conventional methods.

### Brief Description of Drawings

[Figure 1] Figure 1 is an operation process chart according to an embodiment of the present invention.
[Figure 2] Figure 2 is a perspective view of a sliding member manufactured by a manufacturing method according to the present invention.
[Figure 3] Figure 3 is a front view of principal part of Figure 1.
[Figure 4] Figure 4 is an enlarged view of the principal part in Figure 3.
[Figure 5] Figure 5 is a schematic sectional view showing an indent and its surroundings formed on the sliding member according to the present embodiment.
[Figure 6] Figure 6 is a schematic sectional view showing an indent and its surroundings formed on a sliding bearing according to a conventional technique.
[Figure 7] Figures 7(a) and 7(b) are sectional photographs of an indent and its surroundings formed on the sliding member according to the present embodiment.
[Figure 8] Figures 8(a) and 8(b) are sectional photographs of an indent and its surroundings formed on the sliding member according to the conventional technique.
[Figure 9] Figure 9 is a diagram comparing results of hardness tests made at four locations (1) to (4) in Figures 7(a) and 8(a).
[Figure 10] Figure 10 is a diagram showing amounts of protrusion of bumps on the back surface and bump reduction processes by means of back processing according to the conventional technique and the present embodiment.

### Mode for Carrying Out the Invention

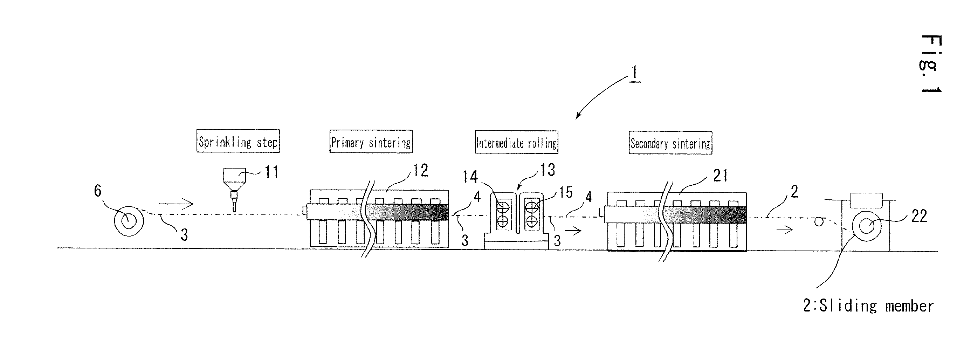

To describe the present invention with reference to an illustrated embodiment, Figure 1 shows a manufacturing system 1 for a sliding member according to the present invention. The present embodiment relates to the manufacturing system 1 for a thin-plate sliding member 2 used for a sliding bearing as well as to a manufacturing process using the manufacturing system 1, but a configuration of the sliding member 2 manufactured by the manufacturing system 1 will be described before describing the manufacturing process of the sliding member 2 by the manufacturing system 1.

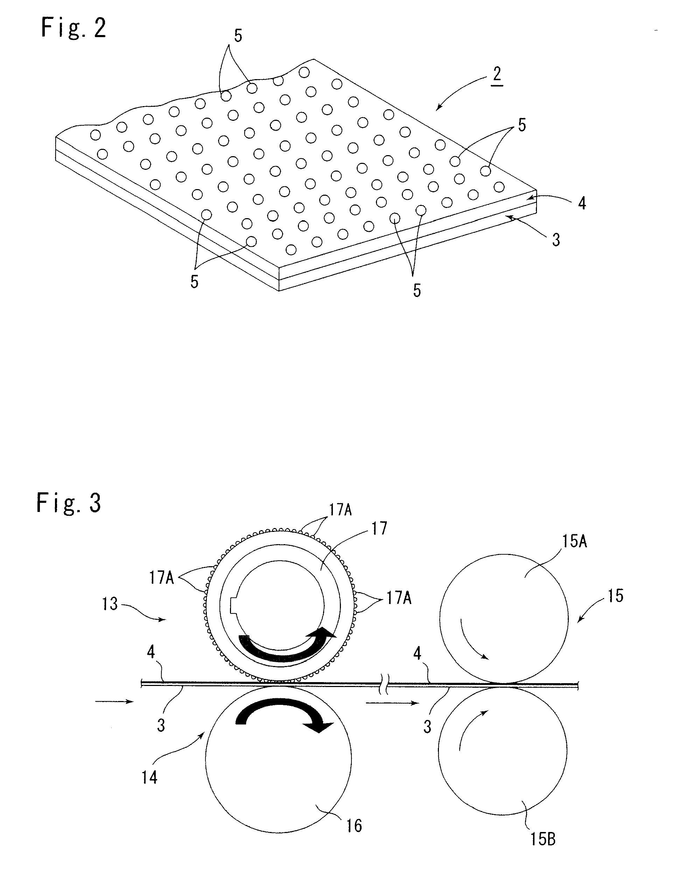

As shown in Figure 2, a product of the sliding member 2 includes thin-plate back metal 3 which is a base material and a sintered alloy layer 4 formed over an entire front surface of the back metal 3 by a sintering process. Besides, a large number of hemispherical indents 5 serving as oil sumps are formed over an entire front surface of the sintered alloy layer 4.
A thin steel plate continuous in a longitudinal direction is used as a material of the back metal 3, and the copper-based sintered alloy layer 4 is formed on the front surface (top face) of the back metal 3. According to the present embodiment, a cold-rolled steel is used as a material of the back metal 3. Alternatively, a steel material whose front surface is pre-plated with copper may be used as the back metal 3. The indents 5 formed as oil sumps on the front surface of the sintered alloy layer 4 are hemispherical depressions about 3 to 4 mm in diameter. Also, it is assumed that the sliding member 2. is about 1 to 6 mm in plate thickness.
The sliding member 2 is cut into a strip of predetermined dimensions and formed into a cylindrical shape, resulting in a sliding bearing, which is fixed to a housing with a back surface of the back metal 3 laid over the housing, where the back surface of the back metal 3 serves as an outer circumferential surface of the sliding bearing. Also, the front surface of the sintered alloy layer 4 acts as a sliding surface adapted to slide over an axial member while serving as an inner circumferential surface of the sliding bearing. Since the large number of indents 5 are formed as oil sumps on the sintered alloy layer 4 acting as a sliding surface, lubricant is designed to be temporarily accumulated in the indents 5, making it possible to improve seizure resistance and wear resistance of the sliding bearing.

A feature of the present embodiment is that during manufacture of the sliding member 2, the large number of indents 5 are formed on the sintered alloy layer 4 immediately after a primary sintering step. This inhibits work hardening from occurring in the front surface and inner part of the sintered alloy layer 4 facing inner space of the indents 5 and reduces amounts of protrusion of bumps produced on the back surface at locations corresponding to the indents 5.
Now, a manufacturing process using the manufacturing system 1 according to the present embodiment will be described with reference to Figure 1. First, the thin-plate back metal 3 provided in the form of a rolled material 6 is pulled out by a mechanism (not shown) and supplied to a sinter-material sprinkling mechanism 11 on an adjacent downstream side.
When the back metal 3 is fed into the sinter-material sprinkling mechanism 11, lead and copper powder, which is to become a material of the sintered alloy layer 4, is sprinkled over an entire front surface (entire top face) of the back metal 3 by the sinter-material sprinkling mechanism 11 (sprinkling step). Incidentally, although a single type of metal powder, namely, a Cu-Sn-Bi alloy, is sprinkled as a material of the sintered alloy layer 4 in the present embodiment, a mixture of two or more types of metal powder (e.g., Cu powder, Sn powder, and Bi powder) may be sprinkled. However, this is only an example, and, of course, types of metal powder and combinations thereof are not limited those described above.
The back metal 3 whose front surface is thus sprinkled with the powder of the metal material intended to become the sintered alloy layer 4 is subsequently fed into a first sintering mechanism 12, and then heated to a required temperature while being transported downstream. Consequently, the sintered alloy layer 4 is designed to be formed over the entire front surface of the back metal 3 (primary sintering process). A conventionally known method and mechanism such as electric furnace sintering or microwave sintering can be used for the primary sintering described so far.

In this way, the sintered alloy layer 4 is designed to be formed on the front surface of the back metal 3 as the back metal 3 is heated while being transported in the first sintering mechanism 12, and subsequently the back metal 3 with the sintered alloy layer 4 laminated on the front surface thereof is supplied to an intermediate rolling mechanism 13. Incidentally, after the primary sintering process, the back metal 3 and sintered alloy layer 4 may be cooled to a required temperature before being supplied to the intermediate rolling mechanism 13.

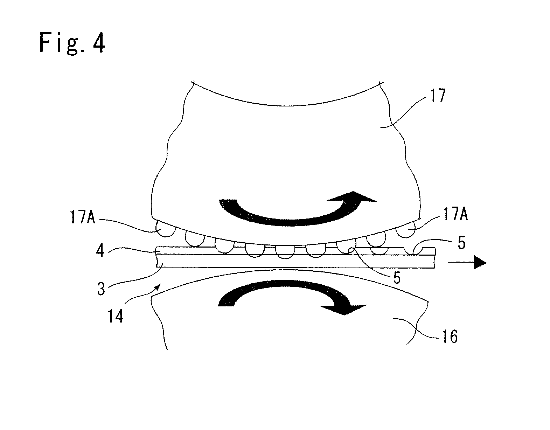

The intermediate rolling mechanism 13 according to the present embodiment includes an indent forming mechanism 14 placed at an adjacent downstream position and adapted to form a large number of indents 5 on the front surface of the sintered alloy layer 4, and a reduction roll 15 placed at a downstream position adjacent to the indent forming mechanism 14.
As shown in Figures 3 and 4, the indent forming mechanism 14 includes a revolving roll 16 located on the lower side and provided with a smooth outer circumferential surface without irregularities, and a forming roll 17 provided with a large number of forming pins 17A placed radially on an entire area of the outer circumferential surface. When the back metal 3 with the sintered alloy layer 4 laminated thereon is fed in between the revolving roll 16 and forming roll 17, the back metal 3 and sintered alloy layer 4 pass between the rolls 16 and 17, causing the large number of forming pins 17A of the forming roll 17 to form a large number of hemispherical indents 5 on the front surface of the sintered alloy layer 4.
The reduction roll 15 on the downstream side is provided with a pair of upper and lower revolving rolls 15A and 15B, which are designed to rotate in the direction of the arrow in synchronization. When the sintered alloy layer 4 with the indents formed thereon and the back metal 3 are fed into the reduction roll 15 from the indent forming mechanism 14, the sintered alloy layer 4 and back metal 3 are rolled by the revolving rolls 15A and 15B of the reduction roll 15 and subsequently sent out to a second sintering mechanism 21 located at an adjacent position.

In this way, according to the present embodiment, the large number of indents 5 are designed to be formed as oil sumps on the sintered alloy layer 4 by the indent forming mechanism 14 and the sintered alloy layer 4 with the large number of indents 5 formed thereon and the back metal 3 are designed to be subsequently rolled by the reduction roll 15 and then fed into the second sintering mechanism 21. Thus, by forming the large number of indents 5 on the sintered alloy layer 4 before the metals in the sintered alloy layer 4 are organized after the primary sintering process, the present embodiment can inhibit work hardening from occurring in the indents 5 and surroundings thereof.
Then, the back metal 3 and sintered alloy layer 4 are subjected to a finish-sintering process (secondary sintering process) by being heated again by the second sintering mechanism 21.
Consequently, the product of the sliding member 2 shown in Figure 2 is manufactured. The product of the sliding member 2 is designed to be wound by a wind-up roll 22 placed on the most downstream side.
Incidentally, after the finish-sintering process by the second sintering mechanism 21, the back metal 3 and sintered alloy layer 4 may be cooled to a required temperature. Furthermore, after such a cooling process, finish machining such as sanding may be applied to the back metal 3 and sintered alloy layer 4. Also, conventionally known mechanisms may be used for the secondary sintering process and subsequent processes.

As described above, with the manufacturing system 1 according to the present embodiment, immediately after the sintered alloy layer 4 is laminated and thereby formed on the front surface of the back metal 3 by the primary sintering process, a large number of indents 5 are formed on the sintered alloy layer 4 by the indent forming mechanism 14. Then, the sintered alloy layer 4 and back metal 3 are rolled by the reduction roll 15. That is, the large number of indents 5 are formed on the front surface of the sintered alloy layer 4 before the finish-sintering process is applied by the second sintering mechanism 21 and before the rolling by the reduction roll 15. Consequently, the present embodiment inhibits work hardening from occurring at the locations of indents 5 and inside the sintered alloy layer 4 on the product of the sliding member 2.

Figure 5 is a schematic view showing a cross section of a product of the sliding member 2 according to the present embodiment. As shown in Figure 5, the sintered alloy layer 4 of the sliding member 2 has a matrix structure in which lead and copper constituting metallic components are spread as grains instead of forming layers. In other words, according to the present embodiment, work hardening does not occur in the indents 5 and surroundings thereof in the sintered alloy layer 4 (the front surface and inner part of the sintered alloy layer 4 facing the inner space of the indents 5) because the metallic components remain grainy without becoming lamellar. Therefore, bottoms of the indents 5 and surroundings thereof are less prone to crack development. Besides, the front surface and inner part of the sintered alloy layer 4 are also less prone to work hardening. Furthermore, formation of the indents 5 is not accompanied by development of burr-like bulging on edges 5A of the indents 5.
The reason why bulging portions do not develop on edges of the indents 5 in the present embodiment in this way is considered to be as follows. That is, in the present embodiment, since the components constituting the sintered alloy layer 4 remain grainy, there are minute gaps remaining among particles of the components. Consequently, in the step of forming the large number of indents 5 on the sintered alloy layer 4 such as described above, when the forming pins 17A are pushed into the sintered alloy layer 4 from the upper side, compressing the particles in the component, the minute gaps provide escape for the particles. This is believed to be the reason why burr-like bulges are not formed on edges of the indents 5.
Moreover, since the sintered alloy layer 4 has not undergone work hardening, even when finish machining is applied to the front surface of the sintered alloy 4, it is possible to prevent the edges 5A of the indents 5 from being chipped off. Furthermore, in the present embodiment, the amount α of protrusion of bumps 3A produced on the back surface of the back metal 3 at locations corresponding to the indents 5 is decreased. Thus, the amount α of protrusion on the back metal of the manufactured sliding bearing is decreased as well.

In contrast to the present embodiment, with the manufacturing method proposed in Patent Literature 2 described above, the sintered alloy layer and back metal are rolled by a reduction roll after a primary sintering process and subsequently a large number of indents are formed on the sintered alloy layer by an indent forming mechanism. With the conventional technique, as shown schematically in Figure 6, the metallic components in the edges of the indents and surroundings thereof become lamellar, causing work hardening, and moreover burr-like bulges are formed on the edges of the indents. It is considered that the burr-like bulges are formed because conventionally the large number of indents are formed on the sintered alloy layer after the sintered alloy layer is rolled. More specifically, the components in the sintered alloy layer after a rolling step become lamellar with gaps among particles of the components almost eliminated. Consequently, when the indents are formed by the forming pins pushed into the sintered alloy layer, there is no escape for the particles arranged in a lamellar fashion in the sintered alloy layer, and so the force of pushing the forming pins into the sintered alloy layer is not absorbed. This is considered to be the reason why bulges are formed on the edges of the indents with the conventional technique.
Also, the amount α of protrusion of the bumps produced on the back surface of the back metal at locations corresponding to the indents are more than twice as large as the amount according to the present embodiment. Consequently, in the case of the sliding member according to the conventional technique, time is required for a finishing operation intended to remove bumps on the back surface and the burr-like bulges on the front surface. Moreover, as described above, the hardened bulges developed on the edges of the indents in the sintered alloy layer could be cracked or chipped when finish machining is applied to the front surface of the sintered alloy.
In other words, compared to the conventional technique, the present embodiment can inhibit work hardening of the sintered alloy layer 4 and reduce the amount α of protrusion of the bumps 3A produced on the back surface of the back metal 3. Consequently, according to the present embodiment, it is enough to perform the operation of removing the bumps 3A produced on the back surface of the back metal 3. Moreover, the time required for the removal operation is shorter than with the conventional technique because of the smaller amount α of protrusion of bumps.

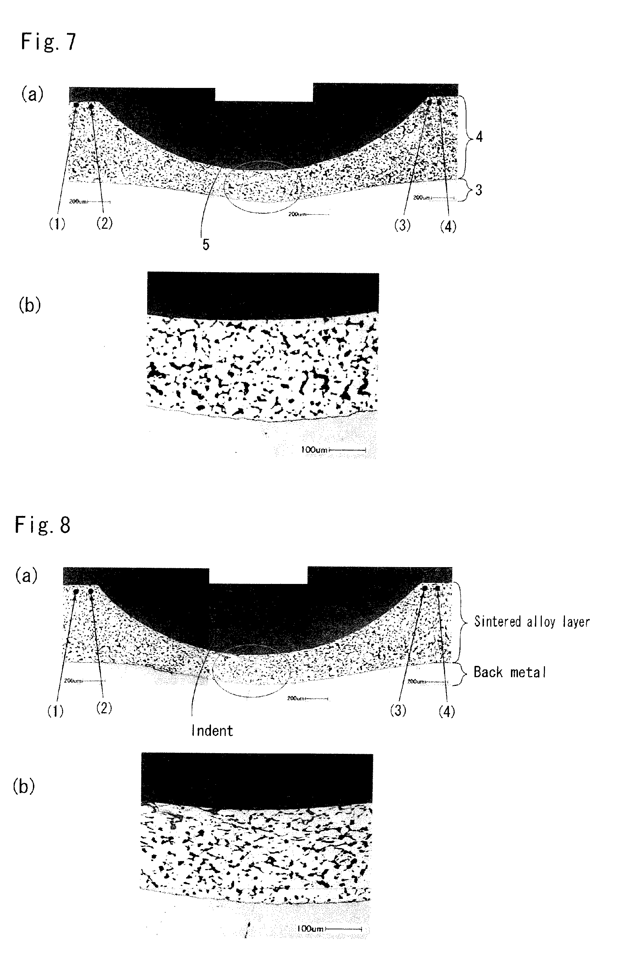

Figures 7 to 10 show data on results of comparison between actual products of the sliding members according to the conventional technique and present embodiment.
Figures 7(a) and 7(b) are sectional photographs of an indent 5 and its surroundings on the sliding member 2 according to the present embodiment, where Figure 7(a) shows a cross section magnified 50 times while Figure 7(b) shows center part of the cross section with a magnification of 100 times.
On the other hand, Figures 8(a) and 8(b) are sectional photographs of an indent and its surroundings on the sliding member according to the conventional technique proposed in Patent Literature 2 described above, where Figure 8(a) shows a cross section magnified 50 times while Figure 7(b) shows center part of the cross section with a magnification of 100 times.
According to the present embodiment shown in Figure 7, not only over the entire front surface of the indent 5, but also inside the indent 5, the sintered alloy layer 4 forms a matrix structure made up of metallic components scattering as grains. Thus, it can be seen that work hardening has not occurred in the bottom of the indent 5 and locations facing the inner space of the indent 5. Consequently, according to the present embodiment, no cracks have developed in the bottom of the indent 5 and locations facing the inner space of the indent 5.
On the other hand, according to the conventional technique shown in Figure 8, although the metallic components are scattered as grains in the bottom of the indent and the neighborhood thereof, the metallic components are lamellar rather than grainy in regions closer to an opening than to the bottom and its surroundings. No cracks have developed in the bottom of the indent 5 with the conventional technique, either. However, as also shown schematically in Figure 6, the metallic components are lamellar in the edge of the indent as well as in locations inside and outside the indent.

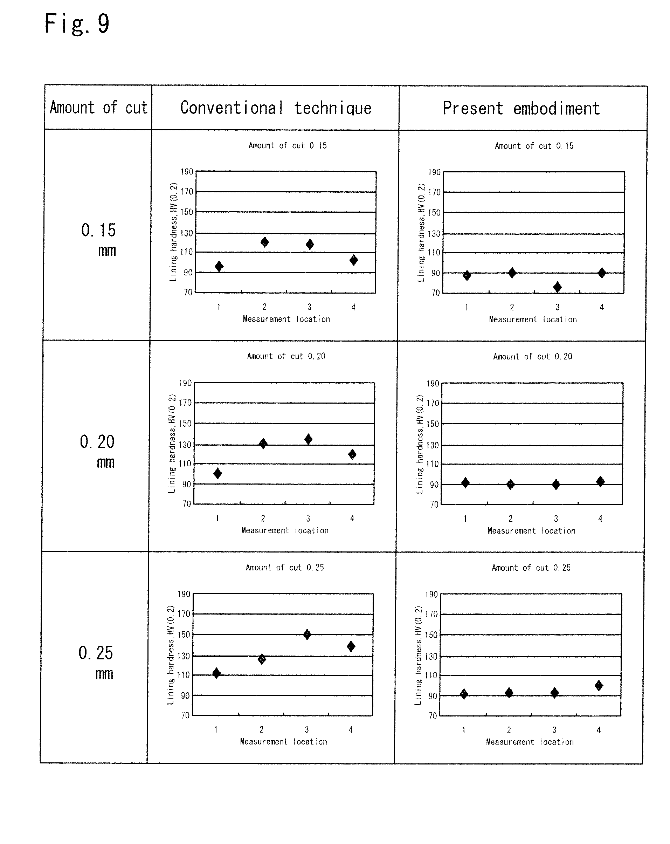

Figure 9 shows results of hardness tests made at four locations (1) to (4) close to the front surface of the sliding members in Figures 7(a) and 8(a), with the sliding members formed into cylindrical shapes. The test results in Figure 9 were obtained by measuring average hardness at each of the four locations (1) to (4) when cuts were made at locations 0.15 mm, 0.20 mm, and 0.25 mm from the front side of the sliding members according to the present embodiment and conventional technique.
The reason why the hardness is measured at locations exposed after cutting predetermined amounts from the surfaces of the sliding members is that cylindrical bushes often have their outer circumferential surface cut or otherwise finish-machined before use after being press-fitted in the housing.
First, when a cut of 0.15 mm was taken from the surface, with the conventional technique, the hardness was about 120 Hv at locations (2) and (3) on the edge of the indent and the hardness was about 100 Hv at locations (1) and (4) near but outside the edge of the indent. The difference in hardness between the locations on the edge of the indent and the locations near but outside the edge of the indent was about 25 Hv at the maximum.
In contrast, according to the present embodiment, the hardness was less than about 90 Hv at all locations (1) and (4). That is, according to the present embodiment, the hardness was substantially identical on the edge 5A of the indent 5 and near but outside the edge 5A of the indent 5 (hardness difference was about 15 Hv at the maximum) and was lower than in the case of the conventional technique.
Next, when a cut of 0.20 mm was taken from the surface, with the conventional technique, the hardness was about 130 to 140 Hv at locations (2) and (3) on the edge of the indent and the hardness was about 100 Hv and 120 Hv, respectively, at locations (1) and (4) near but outside the edge of the indent. Thus, the hardness difference was about 40 Hv at the maximum.
In contrast, according to the present embodiment, the hardness was about 90 Hv at all locations (1) and (4) (hardness difference was about 5 Hv at the maximum).
Furthermore, when a cut of 0.25 mm was taken from the surface, with the conventional technique, the hardness was about 130 Hv and 150 Hv, respectively, at locations (2) and (3) on the edge of the indent. Also, the hardness was about 110 Hv at location (1) near but outside the edge of the indent, and approximately 140 Hv at location (4) on the opposite side. Thus, the hardness difference was about 40 Hv at the maximum.
In contrast, according to the present embodiment, the hardness was about 90 to 100 Hv at all locations (1) and (4) (hardness difference was about 10 Hv at the maximum).
As can be seen from the test results shown in Figure 9, at the locations on the edges 5A of the indents 5 and near but outside the edges 5A of the indents 5, the sliding member 2 according to the present embodiment are softer than in the case of the conventional technique and have substantially uniform hardness. That is, it can be seen that the present embodiment is free from work hardening whereas the conventional technique is subject to work hardening. Incidentally, as described above, even with the conventional technique, as with the present embodiment, no cracks developed in the bottoms of the indents, but when the metallic components in Figures 7 and 8 and the results of the hardness tests are put together, it can be inferred that work hardening occurred in the bottoms of the indents with the conventional technique.

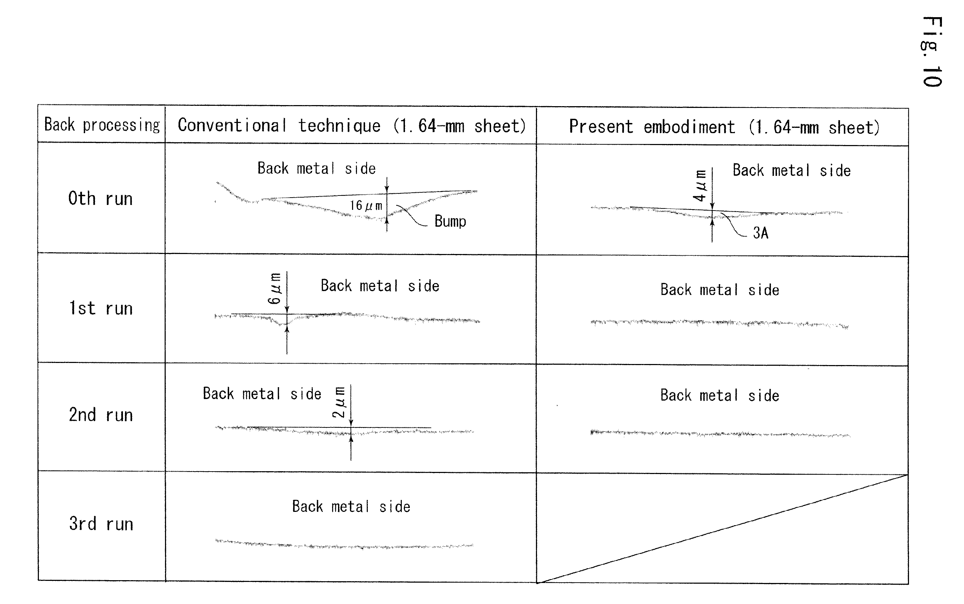

Figure 10 compares the present embodiment and conventional technique in terms of the amount of protrusion of the bumps produced on the back surface at locations corresponding to the indents on the sliding member as well as in terms of the number of times back processing is run to remove the bumps. The back processing here means processing such as grinding and polishing applied to the back surface of the sliding member.
In Figure 10, the 0th run of back processing represents a state before back processing is applied to the bumps produced on the back surface of the sliding member. In this state, the amount of protrusion of the bump was 16 µm with the conventional technique. On the other hand, with the present embodiment, the amount of protrusion of the bump 3A was 4 µm. Thus, it can be seen that with the present embodiment, the amount of protrusion of the bump is reduced to 1/4 when compared to the conventional technique.
Also, Figure 10 shows how the bumps are reduced when back processing is applied to the back surfaces of the sliding members according to the conventional technique and present embodiment successively up to three times (the 1st to 3rd runs). That is, with the present embodiment, as shown on the right side of Figure 10, the bump 3A is removed almost completely after the back processing is run a single time. In contrast, with the conventional technique, as shown on the left side of Figure 10, the bump 3A is removed finally after the back processing is run three times. In this way, with the present embodiment, the amount of protrusion of the bumps 3A produced on the back surface at locations corresponding to the indents 5 is reduced to about 1/4 the amount produced by the conventional technique. Thus, with the present embodiment, to remove the bumps 3A, it is enough to run the back processing only once.
Thus, with the present embodiment, a finishing operation step of removing the bumps 3A produced on the back surface of the sliding member 2 becomes easier than with the conventional technique.

As described above, the manufacturing method which uses the manufacturing system 1 according to the present embodiment can prevent the components in the front surface and inner part of the sintered alloy layer 4 facing the inner space of the indents 5 from becoming lamellar and thereby inhibit work hardening. Consequently, the sliding member 2 is less prone to crack development in the bottoms of the indents 5, and the edges 5A of the indents 5 and surroundings thereof can be inhibited from being chipped off. Also, the edges 5A of the indents 5 are free from bulging. Furthermore, the bumps 3A produced on the back surface at locations corresponding to the indents 5 are smaller in the amount of protrusion than in the case of the conventional technique, making the finishing operation step of removing the bumps 3A easier accordingly. Thus, the manufacturing method according to the present embodiment can provide a sliding member 2 lower in manufacturing cost and better in sliding performance than conventional ones.

### Reference Signs List

1: Manufacturing system for sliding member
2: Sliding member
3: Back metal
4: Sintered alloy layer
5: Indent
14: Indent forming mechanism

## Claims

1. A manufacturing method for a sliding member made up of a sintered alloy layer laminated on a front surface of back metal with a large number of indents formed on a front surface of the sintered alloy layer, the manufacturing method comprising:
sprinkling powder of at least one or more types of metal over the front surface of the back metal; applying a primary sintering process to the powder of the metal to laminate and thereby form the sintered alloy layer on the front surface of the back metal; forming the large number of indents on the front surface of the sintered alloy layer laminated on the back metal; rolling the sintered alloy layer with the indents formed thereon, together with the back metal; and then applying a secondary sintering process to the sintered alloy layer with the indents formed thereon, thereby manufacturing the sliding member.

2. The manufacturing method for a sliding member according to claim 1, wherein the back metal is made of a steel material whose front surface is pre-plated with copper.

3. A sliding member manufactured by the manufacturing method according to claim 1 or 2, wherein in a front surface and inner part of the indents facing an inner space of the indents, the sintered alloy layer forms a matrix structure in which the metal is spread as grains.

4. The sliding member according to claim 3, wherein when the sliding member is formed into a cylindrical or semi-cylindrical sliding bearing, a hardness difference between hardness on edges of the indents and hardness of areas other than the edges of the indents is 15 Hv or below.
